# EUROPEAN PATENT APPLICATION

(11) **EP 2 754 992 A1**
(43) Date of publication of application: **16.07.2014**
(21) Application number: 13150591.9
(22) Date of filing: 09.01.2013
(51) Int. Cl.: G01B 11/00, G01B 11/24

(54) **Optical profilometer**

(71) Applicant: Nederlandse Organisatie voor Toegepast -Natuurwetenschappelijk Onderzoek TNO, 2628 VK Delft (NL)
(72) Inventor: Bos, Arjo, 2628 VK Delft (NL); Henselmans, Rens, 2628 VK Delft (NL)
(74) Representative: Jansen, Cornelis Marinus

(57) **Abstract**

Optical profilometer for measuring the height profile and contours of a sample surface. The profilometer is in particular suitable for measuring large optical segments such as mirrors and lenses for astronomy and lithography. The profilometer comprises an optical probe for measuring the distance between the optical probe and the surface. The probe is attached to a frame (401) and can move along that frame in the x-direction. The frame (401) itself can move in the y-direction along another frame (403) to allow scanneing the whole surface. The probe position in the x-y plane is determined by measuring the distance between the optical probe and frame (403). Also the distance from the probe to the bar in the z-direction can be measured. To increase the accuracy, the position of the sample relative to the frame is measured. Distances are measured optically, preferably by a multi-axis interferometer system.

## Description

The present invention relates to an optical profilometer for measuring the height profile of the surface of a sample. More in particular it relates to such an optical profilometer comprising an optical probe for measuring a first distance between the optical probe and the sample surface, a first frame part, a second frame part carrying the optical probe, and at least one distance sensor for measuring a second distance between the first frame part and the second frame part, the first frame part and the second frame part being movable in a first moving direction relative to each other and the optical probe being movable relative to the second frame part in a second moving direction.

### State of the art

Optical profilometers for measuring the height profile of a surface are known in the art. Typically such profilometers are used for measuring very accurate optical components, such as lenses and mirrors for lithography and astronomy. In particular in astronomy large lenses and mirrors are being used. Such optical components are difficult to handle in a precision measurement apparatus because of the size and weight. Obtaining the required nanometre accuracy for such components is a challenge for metrology and tooling.

The basic principle of the metrology system and the state of the art in this field of technology can be found in for example an article of P.B. Leadbeater et al. (P.B. Leadbeater, M. Clarke, W.J. Wills-Moren and T.J. Wilson, "A unique machines for grinding large, off-axis optical components; the OAGM 2500 ", Precision Engineering, October 1989, vol. 11, no. 4, pp. 191-196). Although this article in particular relates to a grinding apparatus, the principles described in that article also apply for measuring.

The component of which the surface has to be worked or measured is placed on a support or table comprising two parallel reference or metrology bars defining the y-direction. These two y-bars in combination are part of a first frame part of the apparatus. A second frame part of the apparatus comprises another reference or metrology bar. This so-called x-bar is mounted above the parallel y-bars at right angles to these y-bars. The tool for working the surface and/or the optical probe for measuring the surface is attached to the x-bar so that the tool and/or probe moves together with the x-bar. Further, the apparatus is construed so that the tool and/or probe can be moved relative to the x-bar in the x-direction. By moving the second frame part comprising the x-bar in the y-direction, the tool and/or optical probe can be moved in the y-direction. So, the whole surface can be scanned by moving the probe relative to the x-bar in the x-direction and by moving the x-bar and probe jointly in the y-direction. The height of the surface at a defined x-y position is determined by measuring the distance between the optical probe and the surface in a direction that is called the z-direction, being a direction perpendicular to the plane formed by the x-direction and the y-direction.

Typically, such an apparatus comprises a dedicated optical monitoring system based on optical interferometry to monitor the position of the probe, in particular the position of the first frame part comprising the y-bars, relative to the second frame part comprising the x-bar. For this purpose one or more lasers are incorporated in the apparatus. Those who are skilled in the art of optical metrology are familiar with how to incorporate such monitoring system.

The accuracy of profilometers according to the state of the art is limited for example due to drift caused by mechanical and thermo-mechanical effects both in relation to the profilometer itself and in relation to the sample. In particular such and other disturbing effects have influence on the position of the sample relative to the profilometer.

### Summary of the invention

An objective of the present invention is to provide an optical profilometer for measuring the height profile of a surface at higher accuracy than possible with such profilometers known in the art.

This objective of the invention is obtained by an optical profilometer for measuring the height profile of the surface of a sample comprising
- an optical probe for measuring a first distance between the optical probe and the sample surface,
- a first frame part,
- a second frame part carrying the optical probe,
- at least one distance sensor for measuring a second distance between the first frame part and the second frame part,
   the first frame part and the second frame part being movable in a first moving direction relative to each other, and
   the optical probe being movable relative to the second frame part in a second moving direction,
   characterised in that
   the profilometer further comprises at least one distance sensor for measuring
- a third distance between the optical probe and the first frame part in a first probe positioning direction, and
- a fourth distance between the optical probe and the first frame part in a second probe positioning direction,
the first and the second probe positioning directions being parallel to a plane formed by said first and second moving directions.

An advantage of measuring the distance between the optical probe and the first frame part in two directions parallel to a plane formed by said first and second moving directions is that this allows determining directly the position of the probe, independent of the position of the second frame part the probe is attached to.

An effect of the measuring the position of the probe directly instead of deriving its position from the position of the second frame part is that the so called Abbe error is reduced or even eliminated. The Abbe error is an error in determining the position or distance arising from measuring a distance off-axis, so by not measuring the distance in line with the measurement point, here being the tip of the optical probe.

Consequently, the position of the optical probe can be determined more accurately than in known profilometers.

Where reference is made to a height profile of a surface this includes not only the roughness of a surface but also the contours, viz. the waviness and form of the surface.

### Brief description of the figures

- Figure 1: shows a schematic cross sectional view of an optical profilometer with a moving x-bar.
- Figure 2: shows a schematic cross sectional view of an optical profilometer comprising additional distance sensors.
- Figure 3: illustrates an advantageous set-up for correction an Abbe error of the probe.
- Figure 4: shows a schematic three-dimensional view of the metrology system of the profilometer with a moving x-bar.
- Figure 5: shows a profilometer design example, including vibration isolation.
- Figure 6: shows a twelve-axis interferometer design.
- Figure 7: shows a schematic cross sectional view of an optical profilometer with a moving first frame part carrying a sample.

### Detailed description the invention

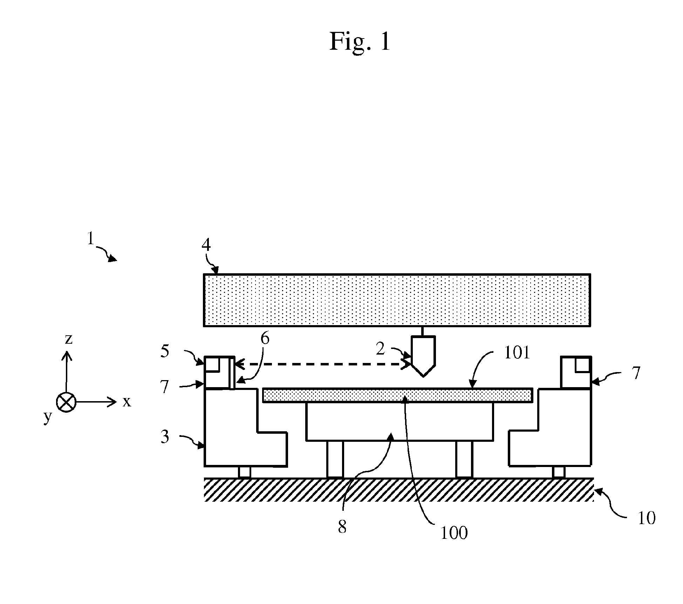

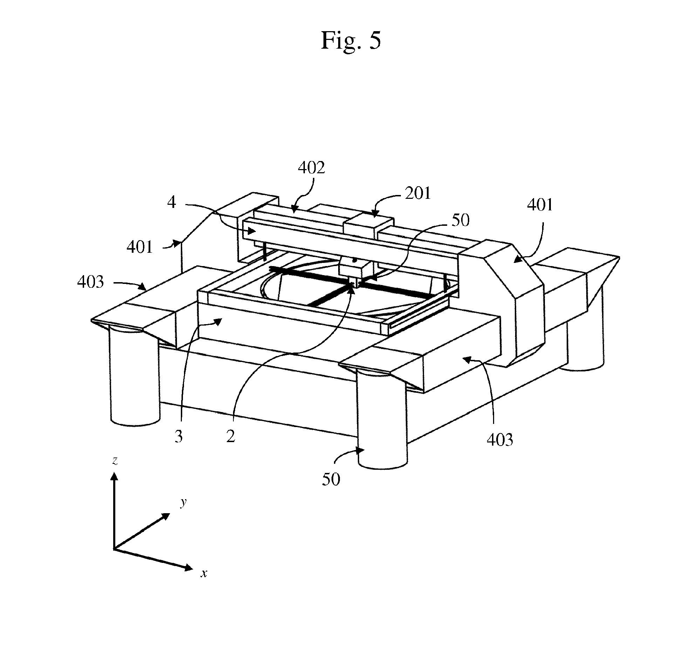

Figure 1 schematically shows a cross section of an embodiment of the optical profilometer for measuring the height profile of a surface (101) of a sample (100). The first frame part (3) of the apparatus is placed on a bearing surface (10), which may be a support or table. This table or support may be isolated for vibrations from the surrounding, in particular vibration from the floor on which the table is standing as is shown in the design example of figure 5. The table or support may also comprise an active vibration isolation for acoustic vibrations in the air. Referring to figure 1 again, the first frame part comprises two parallel y-bars (7) extending in the y direction, viz. perpendicular to the plane of drawing. The first frame part further comprises means for guiding a second frame part that is placed above the y-bars, in the x direction. Such guiding means are not shown in the schematic drawing of figure 1 but can be seen in figure 5. Figure 5 shows two guiding bars (403) extending in the y direction. Further guiding means (401) for carrying the x-bar (4) in the y-direction can been seen.

The second frame part comprising a reference or metrology bar (4) extending from the first y-bar at the left hand side to the second y-bar at the right hand side in figure 1, is construed as to carry the optical probe (2) for measuring the profile. More in particular the probe is attached to this x-bar such that the optical signal between the surface and the optical probe is not hindered. Preferably, the probe is situated between the x-bar and the plane in which the surface that has to measured will be or is placed. However, the probe may also be attached otherwise to the x-beam provided that the optical signal between the probe and the surface and the signals for measuring the position of the probe, as will be discussed later, are not hindered. The second frame part further comprises means for moving the optical probe in the x-direction, viz. parallel to the x-bar. Such means for moving the optical probe are not shown in figure 1 but can be seen in figure 5. Figure 5 shows a guiding bar (402) parallel to the x-bar (4) and guiding means (201) for moving the probe along the guiding bar.

Because the optical probe is attached to the second frame part, the probe can also be moved in the y-direction above the surface by moving the second frame part relative to the first frame part and more in particular relative to the surface to be measured. So, a whole surface of a sample placed between the two y-bars can be scanned by moving the second frame part in the y direction and by moving the probe relative to the x-bar in the x direction.

In addition, the second frame part may comprise means for displacing the probe in the z-direction, viz. in the direction perpendicular the plane formed by the x-direction and the y-direction. However, the optical probe may also be attached to the second frame part such that the probe has only a translation freedom in the x-direction. In that case the probe has no freedom to translate in the y-direction or in the z-direction relative to the second frame part. Neither has the probe rotational freedom in this situation.

The first frame part is construed such that the sample to be measured can be placed between the two y-bars and below the x-bar. The sample may be directly placed on the table (10) or on the first frame part. The sample may, however, also be placed on a sample holder (8), which sample holder may be at a fixed position relative to the first frame part or may be displaceable with respect to the first frame part in order to position the sample relative to the first frame part. The sample may be also a complete optical component comprising for example actuators for varying the shape of the surface. The profilometer according to the invention, therefore also can be used to adjust and calibrate such active optical components.

In order to determine the height profile of the surface, the distance between the first frame part, relative to which the sample is positioned, and the second frame part, relative to which the optical probe is positioned, has to be measured. Therefore, the apparatus comprises at least one distance sensor (5) for measuring the distance between the first frame part, more in particular the y-bars (7), and the second frame part, more in particular the x-bar (4). Preferably, the distance is measured at the two ends of the x-bar, viz. at the position of the two y-bars. Preferably, the distance is measured by optical interferometry but also other optical and even non-optical methods may be applied for specific applications. The preferred embodiment where distance measurements are based on optical interferometry, comprises at least one light source. A laser source and the interferometer may be placed at the first frame part whereas the second frame part comprises reflectors for reflecting the light beam. It is preferred to have the laser and sensors placed at the first frame part or even more preferably on the support, in order to keep the weight of the movable second frame part as low as possible and to reduce the heat load of metrology frame caused by the laser.

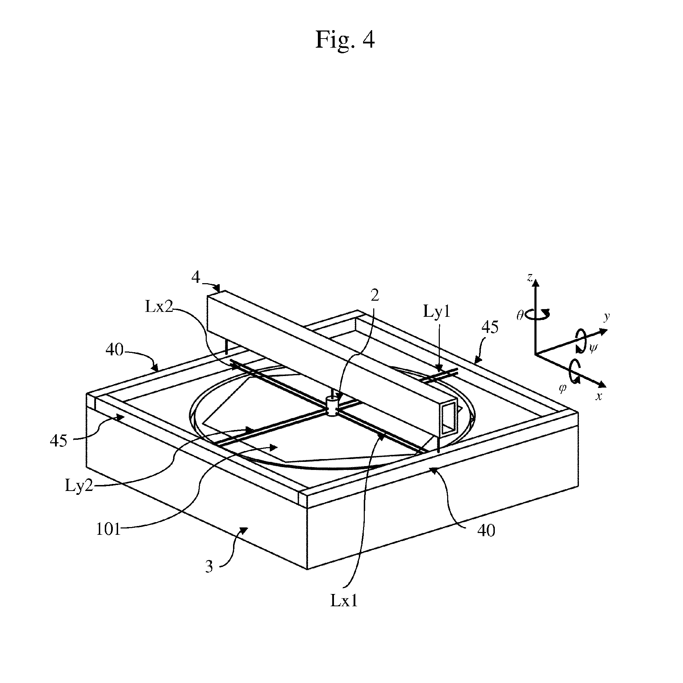

The profilometer further comprises a distance sensor (6) for measuring the distance between the optical probe and the first frame part in two directions parallel to a plane formed by the x-direction and the y-direction, viz. the moving direction of the optical probe relative to the second frame part and the moving direction of the second frame part. An accurate position of the optical probe is obtained by measuring the distance to the reference bars at the actual position of the probe itself. Such a measurement is independent of the position of the second frame part to which the probe is attached. Preferably, the position is determined by measuring the distance between the probe and the first frame part by optical means such as interferometry. Optical beams are directed between the optical probe and the first frame part in two probe positioning directions, preferably in the x-direction and in the y-direction. In figure 1 this is illustrated for the x-direction with the dashed line. More clearly this can be seen in figure 4 where the light beams for measuring the distance are indicated by Lx1 for the distance measurement in the x-direction and by Ly1 for the distance measurement in the y-direction. To improve accuracy, the distance is preferably also measured in the second, opposite x-direction as indicated by Lx2 and in the second, opposite y-direction as indicated by Ly2. Here, with opposite directions are meant the directions at opposite sides of the probe in said direction.

The first frame part may comprise reflective bars positioned at its outside borders for measuring the x-y position of the optical probe a shown in figure 4. Figure 4 shows two parallel bars in the y-direction (40) which bars preferably are the reference y-bars eventually coated at the inner side with a reflective mirror coating. Two additional bars (45), which bars also may be reflective at the inner side, viz. the side that is directed towards the optical probe, are placed in the x-direction such that the four bars form a square. Also the second frame part, more in particular the part of the x-bar that is facing the y-bars may be partly reflective in order to allow optical distance measurement.

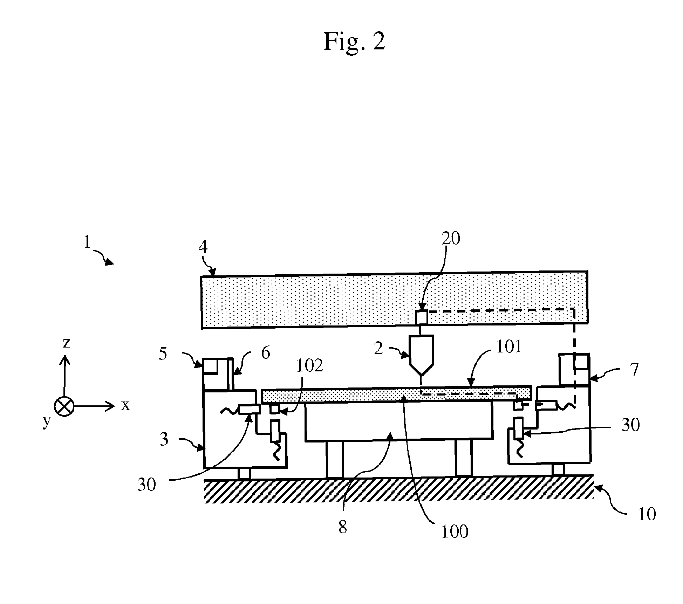

The profilometer may comprise an additional distance sensor (20) as is shown in figure 2. Preferably this additional sensor is an optical distance sensor, more in particular an interferometer, for measuring the distance between the optical probe (2) and the second frame part, more in particular the x-bar (4). Although many types of interferometer systems may satisfy, the inventors prefer that the sensor is part of a multi-axis interferometer system as will be discussed later. The optical beam for measuring the distance between the optical probe and the second frame part preferably lies in line with the optical measuring beam of the optical probe in order to avoid Abbe errors. Although it is in principle possible to determine the z-position of an optical probe that is fixed in the z-direction to the second frame part, from the distance between the first frame part and the second frame part, this is rather inaccurate because it induces several errors due to for example tolerances resulting from moving the probe relative to the bar.

The first frame part may comprise one or more position detectors for determining the position of the sample relative to the first frame part. Such position detectors may be mechanical elements, such as studs, to position the sample precisely. Preferably however, such detectors are optical or capacitive position sensors (30) as shown in figure 2. In particular capacitive sensors are preferred. The capacitive sensors are part of the short metrology loop as indicated with dashed loop in figure 2. Such a profilometer comprising at least one sensor for determining the position of the sample has as an advantage that it allows correction for displacement of the sample relative to the metrology frame. Such unwanted displacement may be caused by for example thermal expansion, working of the sample or external disturbances. In particular it is advantageous to apply at least three position sensors for measuring the position of the sample relative to the frame in the z-direction. In case that the material of the sample is not suited for capacitive measurement, for example if it is not sufficient electrical conductive, a piece of metal (102) may be fixed to the sample, for example by gluing or coating. Mutatis mutandis this holds in a case where the distance is measured optically and the surface is not sufficient reflective.

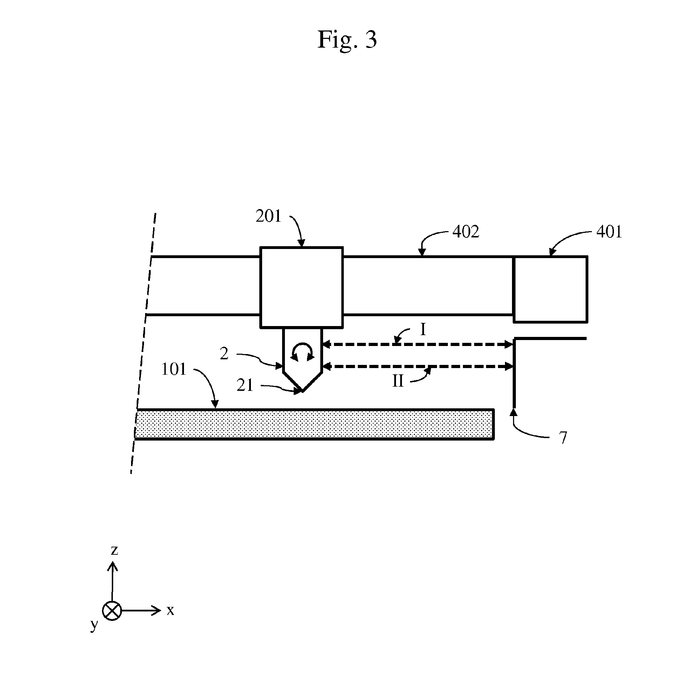

Further improvement in determining the position of the optical probe is possible by using two parallel optical beams, for example interferometer beams for determining the distance between the optical probe and the first frame part as shown in figure 3. Here, it will briefly be discussed how measuring the distance between the optical probe and the frame at two vertical positions of the probe will improve accuracy in comparison with measuring such distance only at one position of the probe. The principle discussed here, actually holds for all rotations along an axis perpendicular to the plane of the two beams. However, for the profilometer a rotation along an axis in the x-y plane is of particular relevance. Rotation along the z-axis has different consequences.

In figure 3, the x-bar is guided in the y-direction parallel to the y-bar (7) by a guiding member (401). The optical probe (2) is attached to a guiding bar (402) that is part of the second frame part and that is parallel to the x-bar. The probe can be moved in the x-direction by guiding means (201). In case that the two parallel optical beams are vertical beams, viz. the beams are situated above each other when looking in the z-direction, than it is possible to correct for a rotation of the optical probe along a line in the x-y plane. The term vertical beams refers to beams that are above each other when looking in the z-direction. In figure 3, this correction is illustrated for a rotation around the y-axis. Figure 3 shows two parallel beams (I, II) that are in the plane of drawing, viz. the x-z plane. When the optical probe is rotated along the y-axis, the tip (21) of the optical probe will be at a different position than measured by a single beam, for example beam (I), resulting in what is called an Abbe error. The consequence of such error in this situation is that the optical measuring beam of the optical probe will hit the sample surface at a different x-y position than the measured x-y position, resulting in less accuracy of the profilometer.

As a result of the rotation along the y-axis, the length of the upper optical path (I) will be different from the length of the lower optical path (II). Knowing this difference allows determining the angle of rotation along the y-axis and thus allows correcting for the Abbe error resulting from that rotation an thus allows improving the accuracy of the profilometer.

In case that the vertical parallel optical beams are perpendicular to the plane of drawing, then the angle of rotation along the x-axis can be determined and the Abbe error for that rotation can be corrected for in a similar way as was discussed above for a rotation along the y-axis. A similar misalignment occurs when not only the optical probe but the whole second frame part is rotated along the x-direction, viz. when the second frame part is not in a perfect upright position relative to the x-y plane but is inclined. In such a case, the y-position of the x-bar will not be the y-position of the optical probe.

For measuring distances in the profilometer, preferably an optical system, more in particular an interferometer system is applied. In an embodiment comprising such an interferometer system, preferably reflective or partly reflective reference bars (40,45) are used as shown in figure 5. Such bars will be mirrors for the optical beams of the interferometer system. Also parts of the second frame part, in particular parts of the x-bar may be reflective. An interferometer system measures the displacement of the optical probe relative to the reference mirror bars being part of the first frame part. With reference to figure 4, it is appreciated that the x, y, ϕ, and ψ may be measured directly. The z-displacement of the optical probe may be measured indirectly via an optical (metrology) beam to the mirror bars on the first frame part. The x, y, ϕ, and ψ coordinates are preferably measured twice to obtain redundant data, which redundancy lowers the measurement noise. Such a set-up results in eight axes for the interferometer system. The z-measurement of the optical probe to the x-bar bar is the ninth axis. Further adding the two z-measurements at the two ends of the x-bar to the y-bars of the first frame part completes the metrology of the interferometer system. This results in an eleven-axis interferometry system. Twelve-axis interferometer systems using only one laser are commercially available and can favourably be applied in the profilometer. However, also other multi-axis interferometer systems can be applied, including systems with less than twelve axis. When using such interferometer systems one may decide not to perform the redundant measurements as mentioned above.

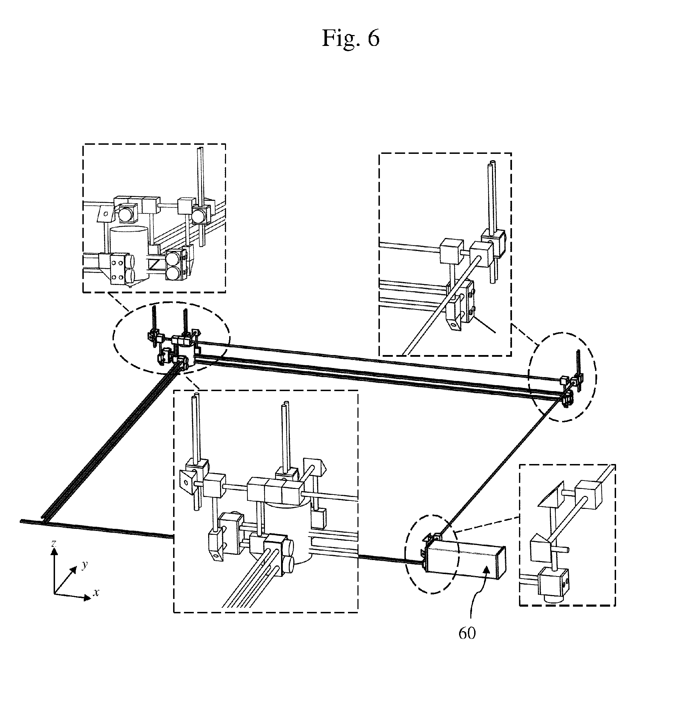

A twelve-axis interferometer design is shown in figure 6. This interferometer system comprises one light source, the laser (60). The different light beams are indicated by solid lines. The system comprises several optical components for directing the beams in the required directions and for constructing interferometers. Those components do not only direct the beams in one specific x-y plane but also direct the beams in x-y planes at different levels in the z-direction to allow for example measuring the distance between the optical probe and the first frame part and between the first and second frame part.

The profilometer may comprise one or more scale systems for determining the y-position of the second frame part. Such a scale system may be a linear encoder, which linear encoder may for example be a part of the bar (40) in the y-direction as shown in figure 4. Although one scale system at one of the two y-bars may satisfy, preferably both y-bars comprise such a scale system in order to allow correction for a possible non-right angle between the x-bar and the y-bars.

The profilometer can be applied in combination with precision tooling equipment in order not only to measure the profile of the surface of the sample but also to change the profile by for example grinding. For this purpose, the optical probe may comprise a machining tool (50) for machining the surface as shown in figure 5.

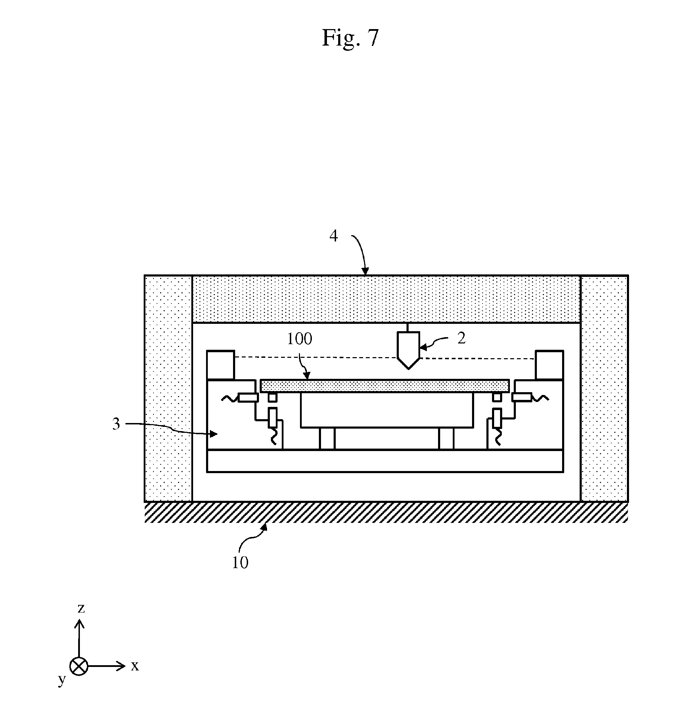

In the description of the embodiments as discussed above where the second frame part is moving relative to a first frame part, it was assumed that the first part is at a fixed position relative to a supporting body. Such an embodiment may be preferred in particular for measuring large samples. However, in another embodiment of the profilometer, as shown in figure 7, the second frame part comprising the x-bar (4) is kept at a fixed position relative to the supporting body (10), like for example a table. In such an embodiment the first frame part (3), which frame part may carry the sample (100), moves relative to the second part that is at a fixed position relative to the support body. A person skilled in the art will know how to implement in such an embodiment with a moving first frame part the principles of design and operation as discussed for the profilometer with a moving second frame part.

## Claims

1. Optical profilometer (1) for measuring the height profile of the surface (101) of a sample (100) comprising
- an optical probe (2) for measuring a first distance between the optical probe and the sample surface,
- a first frame part (3),
- a second frame part (4) carrying the optical probe,
- at least one distance sensor (5) for measuring a second distance between the first frame part and the second frame part,
the first frame part and the second frame part being movable in a first moving direction (y) relative to each other, and
the optical probe being movable relative to the second frame part in a second moving direction (x)
**characterised in that**
the profilometer further comprises at least one distance sensor (6) for measuring
- a third distance between the optical probe and the first frame part in a first probe positioning direction, and
- a fourth distance between the optical probe and the first frame part in a second probe positioning direction,
the first and the second probe positioning directions being parallel to a plane formed by said first and second moving directions.

2. Optical profilometer according to claim 1, wherein the first probe positioning direction is the first moving direction (y) and the second probe positioning direction is the second moving direction (x).

3. Optical profilometer according to claim 1 or 2, further comprising a distance sensor (20) for measuring a fifth distance between the optical probe (2) and the second frame part (4).

4. Optical profilometer according to any of the preceding claims, comprising means for measuring a distance between the optical probe and the first frame part at two mutually vertical positions of the optical probe.

5. Optical profilometer according to any of the preceding claims, comprising a multi-axis interferometer system, which multi-axis interferometer system is configured to measure the second, third, and fourth distance.

6. Optical profilometer according to claim 3, comprising a multi-axis interferometer system, which multi-axis interferometer system is configured to measure the second, third, fourth, and fifth distance.

7. Optical profilometer according to any of the preceding claims, further comprising at least one position detector (30) for determining the position of the sample relative to the first frame part.

8. Optical profilometer according to claim 7, wherein the position detector is an optical or a capacitive sensor for measuring a distance between the sample and the first frame part.

9. Optical profilometer according to any of the preceding claims, wherein the first frame part comprises a scale system (40) for determining the position of the second frame part relative to the first frame part.

10. Optical profilometer according to any of the preceding claims, wherein the optical probe comprises a machining tool (50) for machining the surface.
